## Europäisches Patentamt

## European Patent Office

## Office européen des brevets

(19)

(11) Veröffentlichungsnummer: **0 078 807**
**B1**

(12)
# EUROPÄISCHE PATENTSCHRIFT

(45) Veröffentlichungstag der Patentschrift:
30.04.86

(51) Int. Cl.⁴: **B 60 Q 9/00** // B60T8/00

(21) Anmeldenummer: **82900301.1**

(22) Anmeldetag: **09.01.82**

(86) Internationale Anmeldenummer:
**PCT/DE 82/00007**

(87) Internationale Veröffentlichungsnummer:
**WO 82/04020 (25.11.82 Gazette 82/28)**

(54) **VERFAHREN ZUM SPEICHERN VON FAHRZUSTANDSGRÖSSEN.**

(30) Priorität: 16.05.81 DE 3119610
16.05.81 DE 3119633

(43) Veröffentlichungstag der Anmeldung:
18.05.83 Patentblatt 83/20

(45) Bekanntmachung des Hinweises auf die Patenterteilung:
30.04.86 Patentblatt 86/18

(84) Benannte Vertragsstaaten:
AT BE CH DE FR GB LI NL SE

(56) Entgegenhaltungen:
FR - A - 2 232 805
US - A - 4 114 957

Bosch Technische Berichte, Band 7, Heft 2,
veröffentlicht in 1980 (DE) H. Leiber u.a.:
"Antiblockiersystem (ABS) für Personenkraftwagen"
Seiten 65 bis 94

(73) Patentinhaber: ROBERT BOSCH GMBH, Postfach 50,
D-7000 Stuttgart 1 (DE)

(72) Erfinder: GERSTENMAIER, Jürgen,
Galbergerstrasse 20, D-6903 Neckar-Gmünd (DE)
Erfinder: LEIBER, Heinz, Theodor-Heuss-Strasse 34,
D-7141 Oberriexingen (DE)
Erfinder: STUMPE, Werner, Goerdelerstrasse 10,
D-7014 Kornwestheim (DE)

## Beschreibung

Die Erfindung geht aus von einem Verfahren nach der Gattung der nebengeordneten Ansprüche 1 oder 2.

Es sind bereits zahlreiche Antiblockiersysteme für Fahrzeuge bekannt, bei denen über Geber Fahrzustandsgrößen erfaßt und in einer Auswerteschaltung zu Steuersignalen für die Beeinflussung des Bremsdruckes verarbeitet werden, wenn vorbestimmte Fahrzustände, insbesondere im Hinblick auf den Schlupf zwischen Rad und Fahrbahn auftreten.

Derartige Antiblockiersysteme verleihen zwar den damit ausgerüsteten Fahrzeugen ein gegenüber Fahrzeugen mit herkömmlichen Bremsen überlegenes Bremsverhalten, andererseits ist es jedoch schwierig, einen Unfallhergang zu rekonstruieren, wenn in den Unfall mit Antiblockiersystem ausgerüstete Fahrzeuge verwickelt sind, da diese Fahrzeuge praktisch keine Bremsspuren binterlassen. Dies ist darauf zurückzuführen, daß die üblichen Antiblokkiersysteme einen Schlupf zwischen dem Rad und der Fahrbahn einstellen, der gerade noch nicht zu einer Relativgeschwindigkeit zwischen Rad und Fahrbahn führt, bei der der abrollende Reifen eine Bremsspur hinterläßt.

Vorteile der Erfindung

Die erfindungsgemäßen Verfahren mit den kennzeichnenden Merkmalen der Ansprüche 1 und 2 haben demgegenüber den Vorteil, daß eine Rekonstruktion der Fahrzustände während eines Bremsvorganges mit Antiblockiersystem, insbesondere nach Unfällen, möglich ist.

Aus der US-PS 4 114 957 ist es bekannt, die Geschwindigkeiten der Räder einer Achse zu vergleichen und den Bremsdruck so zu regeln, daß die Radgeschwindigkeiten ein bestimmtes Verhältnis zueinander annehmen. Hier ist auch vorgesehen, die Abweichungen der Radgeschwindigkeiten voneinander dem Fahrer optisch anzuzeigen und diese eventuell auch zu speichern. An eine Rekonstruktion von Unfällen ist hier gedacht. Sie wäre mit gespeicherten Abweichungen der Radgeschwindigkeiten auch nicht möglich.

Durch die in den Unteransprüchen aufgeführten Maßnahmen sind vorteilbafte Weiterbildungen der in den nebengeordneten Ansprücben 1 und 2 angegebenen Antiblockiersysteme möglich.

So wird in bevorzugter Ausgestaltung der Erfindung eine Speicherung der Fahrzustandsgrößen nur dann vorgenommen, wenn eine Auswerteschaltung des Antiblockiersystemes anspricht und gleichzeitig eine vorgegebene Grenzverzögerung überschritten wird. Hierdurch werden insbesondere unnötige Fahrbahnmarkierungen vermieden, da nicht bei jeder Bremsung mit wirksamem Antiblockiersystem eine Speicherung der Fahrzustandsgrößen erforderlich ist. Bei einer weiteren Ausbildung der Erfindung wird die Speicherung nur dann in Betrieb gesetzt, wenn entweder der Bremslichtschalter oder ein Bremsdruckgeber anspricht. Damit ist weiter sichergestellt, daß einmal eine Speicherung der Fahrzustandsgrößen bzw. einer Fahrbahnmarkierung nur bei eingeleiteter Bremsung vorgenommen wird, andererseits ist sichergestellt, daß aucb bei defektem Bremslichtschalter oder Bremsdruckgeber diese Maßnahmen erfolgen.

Weiterhin wird gemäß einer weiteren Ausgestaltung der Erfindung eine Fahrbahnmarkierung in kritischen Fahrzuständen derart vorgenommen, daß Markierungen konstanter zeitlicher Länge auf die Fahrbahn aufgebracht werden, so daß aus der Länge dieser Markierungen ein Rückschluß auf die jeweilige Geschwindigkeit des Fahrzeuges möglich ist.

Weiter wird eine besonders gute Wirkung dann erzielt, wenn der Fahrzustandsgrößen-Speicher in einem plombierten Steckmodul untergebracht ist, da auf diese Weise einerseits ein unbefugter Zugriff zu den gespeicherten Fahrzustandsgrößen verhindert wird und andererseits ein leichtes Entfernen des Speichers aus dem Fahrzeug zur Rekonstruktion der Fahrzustände möglich ist, wobei durch Einsetzen dieses Speichers in andere gleichartige Fahrzeuge eine exakte Rekonstruktion des Bremsvorganges möglich ist.

Ein erfindungsgemäßes Verfahren hat weiter den Vorteil, daß in definierter Weise kurzzeitig Bremsspuren erzeugt werden, womit einmal der Weg des Fahrzeuges und zum anderen die Fahrzeuggeschwindigkeit rekonstruiert werden kann.

So zeichnet sich eine vorteilhafte Weiterbildung des erfindungsgemäßen Verfahrens dadurch aus, daß die bei Antiblockiersystemen üblicherweise eingestellte Druckhaltephase des Bremsdruckes während einer Testphase verlängert wird, so daß sich ein höherer Bremsschlupf einstellt, der zur Folge hat, daß in der Aufstandsfläche des Reifens genügend Reibungsarbeit geleistet wird, die dann zu einer Bremsspur führt.

Nach einer weiteren bevorzugten Ausführungsform der Erdindung wird eine Testphase mit konstanter zeitlicher Lange vorgegeben, so daß aus der Länge der Bremsspur in der Testphase ein Rückschluß auf die Geschwimdigkeit zu Beginn der Testphase möglich ist. Fällt dabei der Beginn der Testphase mit dem ersten Bremszyklus zusammen, ergibt sich damit eine Aussage über die Anbremsgeschwindigkeit.

Gemäß einer weiteren Ausgestaltung der Erfindung wird die Testphase erst nach Unterschreiten einer vorgegebenen Fahrzeug-Testgeschwindigkeit eingeleitet, wobei die Länge der Testphase von der Anbremsgeschwindigkeit abhängig gemacht wird. Auf diese Weise kann die Länge der Bremsspur in die Anbremsgeschwindigkeit umgerechnet werden.

In einer weiteren Ausgestaltung der Erfindung werden Testphasen und Phasen einer Bremsung mit normaler Schlupfschaltschwelle aneindergereih; wodurch nicht nur die Anbremsgeschwindigkeit sondern auch die Fahrzeugverzögerung aus der Bremsspurlänge bzw. dem Abstand der Bremsspur ermittelt werden kann.

Weiterhin wird nach einer weiteren Ausgestaltung der Erfindung eine erhöhte Sicherheit dadurch erzielt, daß die Test-Schlupfschaltschwelle wenigstens näherungsweise umgekehrt proportional zur Fahrzeuggeschwindigkeit eingestellt wird.

Schließlich ist in weiterer Ausgestaltung der Erfindung vorgesehen, daß zur Erhöhung der Sicherheit die Testphasen nur hinsichtlich der Vorderräder bzw. eines Vorderrades wirksam werden und daß die Testphase in vorbestimmten kritischen Fahrzuständen, die aus der Querbeschleunigung, dem Lenkradeinschlagwinkel oder dem Radverzögerungsgradienten ermittelt werden, unterdrückt werden.

Zeichnung

Ausführungsbeispiele der Erfindung sind in der Zeichnung dargestellt und in der nachfolgenden Beschreibung näher erläutert. Es zeigen: Figur 1 ein Blockschaltbild eines erfindungsgemäßen Antiblockiersystems; Figur 2 eine Diagrammdarstellung zur Erläuterung einer erfindungsgemäßen Testphase; Figur 3 verschiedene Diagramme zur Erläuterung des zeitlichen Auftretens von Testphasen nach verschiedenen Ausführungsformen des erfindungsgemäßen Verfahrens; Figur 4 ein Blockschaltbild einer Schaltungsanordnung, wie es zur Durchführung des erfindungsgemäßen Verfahrens verwendet werden kann.

Beschreibung des Ausführungsbeispieles.

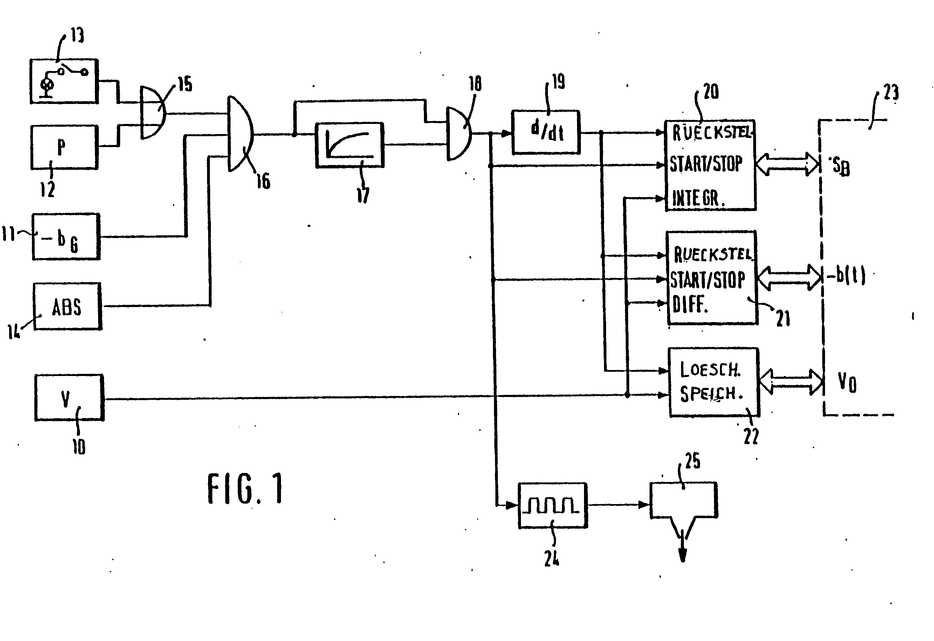

In Figur 1 sind mit 10 ein Fahrzeuggeschwindigkeit-Geber, mit 11 ein Grenzverzögerungs-Geber, mit 12 ein Bremsdruck-Geber, mit 13 ein Bremslichtschalter und mit 14 ein Antiblockiersystem-Auswertgerät bezeichnet. Die von den Elementen 10 bis 14 gelieferten Signale werden als Eingangssignale für die Schaltungsanordnung gemäß der Figur herangezogen. Dabei sind die Ausgangssignale des Bremsdruck-Gebers 12 und des Bremslichtschalters 13 auf ein ODER-Gatter 15 geführt, dessen Ausgang mit einem Eingang eines UND-Gatters 16 verbunden ist. Die beiden weiteren Eingange des UND-Gatters 16 sind mit dem Grenzverzögerungs-Geber 11 bzw. dem Antiblockiersystem-Auswertgerät 14 verbunden. Der Ausgang des UND-Gatters 16 ist einmal direkt an den einem Eingang eines weiteren UND-Gatters 18 und zum anderen über ein Verzögerungsglied 17 an den weiteren Eingang des UND-Gatters 18 angeschlossen. Das UND-Gatter 18 ist auf den Eingang eines Differenziergliedes 19 geführt, das ausgangsseitig mit einer Integrierstufe 20, einer Differenzierstufe 21 und einer Speicherstufe 22 in Verbindung steht. Die Stufen 20 bis 22 sind über Datenleitungen an einen Fahrzustandsgrößen-Speicher 23 angeschlossen. Weiterhin ist der Ausgang des UND-Gatters 18 auf Eingänge der Integrierstufe 20, der Differenzierstufe 21 sowie eine Impulsgenerators 24 geführt, der zur Ansteuerung eines Fahrbahn-Markierers 25 dient. Schließlich steht der Fahrzeuggeschwindigkeit-Geber 10 mit Eingängen der Stufen 20 bis 22 in Wirkungsverbindung.

Im Fahrzeuggeschwindigkeit-Geber 10 wird ein der Fahrzeuggeschwindigkeit über Grund entsprechendes Signal erzeugt. Dies kann einmal aus der Radgeschwindigkeit des am schnellsten drehenden Rades abgeleite; werden, es versteht sich jedoch von selbst, daß ein Fahrzeuggeschwindigkeits-Signal auch auf andere, in diesem Zusammenhang bekannten Weisen erzeugt werden kann, beispielsweise aus dem im Antiblockiersystem-Auswertgerät 14 ohnehin vorhandenen Referenzwert, durch Integration der Fahrzeugverzögerung mit Messung der Anbremsgeschwindigkeit und dgl.

Das Antiblockiersystem-Auswertgerät 14 hat einen Aufbau, wie er in vielfältiger Weise aus dem Stand der Technik bekannt ist. Das bei der Schaltungsanordnung gemäß der Figur verwendete Ausgangssignai gibt lediglich eine Information darüber, ob das Antiblockiersystem gerade anspricht oder nicht, d.h. ob eine Überbremsung des Fahrzeuges stattgefunden hat.

Die Grenzverzögerungs-Geber 11 löst an seinem Eingang dann ein Signal aus, wenn die Fahrzeugverzögerung einen vorgegebenen Grenzwert $-b_G$ überschritten hat. Dieses Signal steht dann solange am Ausgang des Gebers an, bis der Bremsvorgang abgeschlossen ist. Es versteht sich, daß auch diese Eingangsgröße auf andere Weisen erzeugt werden kann, beispielsweise über eine Schwellwertstufe, der das differenzierte Ausgangssignal des Fahrzeuggeschwindigkeit-Gebers 10 zugeführt wird.

Der Übersichtlichkeit halber ist die Schaltungsanordnung gemäß der Figur nur für eindimensionale Fahrzustandsgrößen ausgelegt. In dieser einfachen Ausführung werden dies die Fahrzeuggeschwindigkeit und die Fahrzeugverzögerung in Längsrichtung sein. Wie jedoch ohne weiteres ersichtlich, kann entsprechender Weise auch eine Speicherung der Fahrzustandsgrößen in Querrichtung, also die Quergeschwindigkeit oder die Querverzögerung erfaßt und gespeichert werden.

Die Ausgangssignale des Bremslichtschalters 13 und des Bremsdruckgebers 12 werden über das ODER-Gatter 15 miteinander verknüpft, wodurch sichergestellt ist, daß ein Ausgangssignal auch dann erzeugt wird, wenn eines der beiden Elemente ausfällt. Das Ausgangssignal des ODER-Gatters 15 wird mit den Signalen des Grenzverzögerungs-Gebers 11 und des Antiblockiersystem-Auswertgerätes 14 im UND-Gatter 16 miteinander verknüpft. Auf diese Weise soll sichergestellt werden, daß eine Speicherung der Fahrzustandsgrößen bzw. eine Fahrbahnmarkierung nur dann vorgenommen wird, wenn vom Fahrzustand her eine Grenzsituation vorliegt. Natürlich kann die logische Verknüpfung der einzelnen Größen auch anders aufgebaut sein, die in der Figur dargestellte Anordnung ist daher nur beispielhaft zu verstehen. Die Weiterleitung des Ausgangssignales des UND-Gatters 16 über das Verzögerungsglied 17 und das UND-Gatter 18 hat den Sinn, kurzzeitige Störimpulse, sofern sie am Ausgang des UND-Gatters 16 überhaupt noch auftreten, zu unterdrücken. Die beiden Eingänge des UND-Gatters 18 werden nämlich nur dann angesteuert, wenn das Ausgangssignal des UND-Gatters 16 länger als die im Verzögerungsglied 17 vorbestimmte Zeit anliegt. Das Ausgangssignal des UND-Gatters 18 stellt nun insgesamt ein Maß für den Beginn und das Ende der in diesem Zusammenhang interessierenden Bremsung dar. Aus der Anstiegsflanke dieses Ausgangssignals wird zunächt in Differenzierglied 19 ein Impuls gebildet, der die Stufen 20 bis 22 zurücksetzt bzw. löscht. Das Ausgangssignal des UND-Gatters 13 bestimmt nun einmal den Anfang und das Ende der Integration bzw. der Differentiation des Fahrzeuggeschwindigkeit-Signales vom Geber 10 in der Stufe 20 bzw. 21. Andererseits wird in der Speicherstufe 22 zu Beginn des Bremsvorganges der Augenblickswert der Fahrzeuggeschwindigkeit eingespeichert. Die in den Stufen 20 bis 22 eingespeicherten bzw. erzeugten Fahrzustandsgrößen werden nun über Datenleitungen in den Fahrzustandsgrößen-Speicher 23 übertragen. Das in der Stufe 20 gebildete Integral der Fahrzeuggeschwindigkeit ergibt dabei den Bremsweg $s_B$. Die in der Stufe 21 gebildete erste zeitliche Ableitung der Fahrzeuggeschwindigkeit ergibt die Fahrzeugverzögerung in Abhängigkeit von der Zeit $-b_{(t)}$. In der Stufe 22 wurde die Fahrzeuggeschwindigkeit bei Beginn des Bremsvorganges, d.h. die sogenannte Anbremsgeschwindigkeit $v_0$ gespeichert, die nunmehr in den Fahrzustandsgrößen-Speicher 23 übertragen wird.

Diese drei Fahrzustandsgrößen stehen damit in Speicher 23 am Schluß jedes Bremsvorganges während eines der vorbestimmten Fahrzustände zur Verfügung. In bevorzugter Ausführungsform der Erfindung ist dieser Fahrzustandsgrößen-Speicher 23 als Steckmodul ausgebildet, das gegen unbefugtes Entfernen zweckmäßigerweise durch eine Plombe gesichert ist. Zur Rekonstruktion des Bremsvorganges wird dabei die Plombe entfernt und der Fahrzustandsgrößen-Speicher 23 entnommen. Die in dem Speicher 23 festgehaltenen Fahrzustandsgrößen können nun ausgelesen werden. Es ist jedoch gemäß der Erfindung auch möglich, diese Fahrzustandsgrößen demselben Fahrzeug oder einen anderen gleichen Fahrzeug als Steuergrößen einzuspielen, so daß der Bremsvorgang unter möglichst wirklichkeitsnahen Bedingungen nachvollzogen werden kann.

Die oben beschriebene Verarbeitung und Speicherung von Fahrzustandsgrößen ist natürlich nicht auf die angegebenen Fahrzustandsgrößen beschränkt. Auf entsprechende Weise ist es selbstverständlich auch möglich, weitere Fahrzustandsgrößen, wie Brensdruck, Lenkwinkel, Fahrzeuggeschwindigkeit in Abhängigkeit von der Zeit in Quer- und Längsrichtung und dgl. zu speichern.

In weiterer Ausbildung der Erfindung wird schließlich vom Ausgang des UND-Gatters 18 der Impulsgenerator 24 angesteuert, der den Fahrbahnmarkierer 25 betätigt. Der Fahrbahnmarkierer 25 verspritzt dabei zweckmäßigerweise impulsweise eine Farbe, wobei die Impulslänge in bevorzugter Ausgestaltung der Erfindung eine konstante Zeit hat. Durch Ausmessen der Markierungen ist es dann möglich, einmal den Weg des Fahrzeuges zu rekontruieren und zum anderen aus der Länge der Markierungen die jeweilige Geschwindigkeit des Fahrzeuges zu ermitteln.

Die beiden beschriebenen Maßnahmen der Fahrzustandsgrößen-Speicherung und der Fahrbahnmarkierung können dabei alternativ oder gemeinsam verwendet werden. Die Fahrbahn kann dabei, wie nachstehend beschrieben, auch durch eine Bremsspur definiert markiert werden.

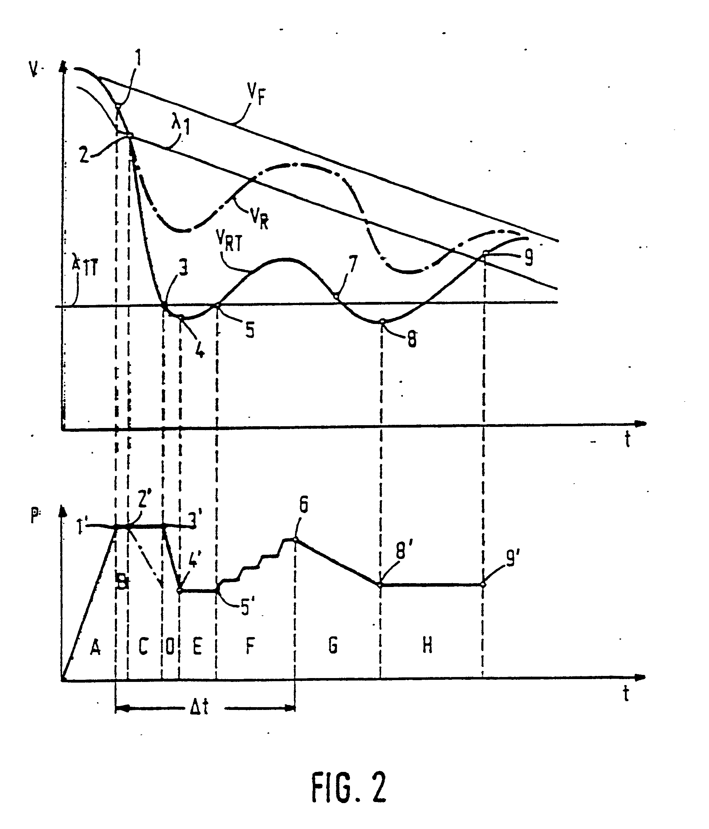

In Figur 2 sind zwei Diagramme dargestellt, und zwar einmal ein Geschwindigkeits/Zeitdiagramm v (t) und zum anderen ein Bremsdruck/Zeitdiagramm p (t). Im ersten Diagramm sind dabei einmal die Fahrzeuggeschwindigkeit $v_F$, die Radgeschwindigkeit $v_R$ bei normalen Betrieb mit Antiblockiersystem und die Radgeschwindigkeit $v_{RT}$ in einer Testphase, wie sie weiter unten noch eingehend erläutert wird, dargestellt. Demgegenüber zeigt das untere Diagramm den Breisdruck p während einer Testphase, während der sonst übliche Bremsdruck nur andeutungsweise strichpunktiert dargestellt ist.

Es ist, unter anderem aus den eingangs genannten Literaturstellen bekannt, die Einstellung des Bremsdruckes über der Zeit in Abhängigkeit von Über- bzw. Unterschreiten bestimmter Verzögerungs- bzw. Beschleunigungsschwellen der Radgeschwindigkeit vorzunehmen. Bei Einleitung eines Bremsvorganges wird im Bereich A zunächst der Bremsdruck ansteigen und die Radgeschwindigkeit gegenüber der Fahrzeuggeschwindigkeit steil abfallen. im Punkte 1 ist dann eine vorgegebene Verzögerungsschwelle -b überschritten, die zu einer Konstanthaltung ab dem Punkt 1' im Bremsdruckdiagramm führt. Bei üblichen Antiblockiersystemen hält diese Druckhaltephase B nun solange an, bis die Radgeschwindigkeit eine vorgegebene Schlupfschalt schwelle $\lambda_1$, die im oberen Geschwindigkeitsdiagramm angedeutet ist, überschritten hat, was bei der Darstellung gemäß Figur 2 in Punkt 2 der Fall ist. Ab den zugehörigen Punkt 2' im Druckdiagramm würde gemäß einem üblichen Antiblockiersystem der Bremsdruck wieder abfallen, wie dies strichpunktiert im Druckdiagramm dargestellt ist. Hierzu ergäbe sich dann ein Verlauf der Radgeschwindigkeit $v_R$, wie er in Figur 2 oben ebenfalls strichpunktiert gezeigt ist.

Gemäß dem erfindungsgemäßen Verfahren wird jedoch der Regelung nicht die übliche Schlupfschaltschwelle $\lambda_1$ zugrundegelegt sondern während einer Testphase eine Test-Schlupfschaltschwelle $\lambda_{1T}$, die wesentlich höher ist als die Schlupfschaltschwelle $\lambda_1$ beispielsweise 50 %. Denzufolge wird der Bremsdruck bis zum Unterschreiten dieser Test-Schlupfschaltschwelle $\lambda_{1T}$ im Punkt 3 konstant gehalten, so daß sich eine Druckhaltephase C bis zum Punkt 3' ergibt. Erst von diesem Punkt 3' an wird der Druck in einem Bereich D wieder abgesenkt, bis die Radverzögerung soweit abgenommen hat, daß der Schwellwert -b in Punkt 4 wieder erreicht ist. Ab dem zugehörigen Punkt 4' in Druckdiagramm wird der Druck nun in Bereich E wieder konstant gehalten, bis die Radgeschwindigkeit $v_{RT}$ die Test-Schlupfschaltschwelle $\lambda_{1T}$ im Punkt 5 wieder überschritten hat. Ab dem zugehörigen Punkt 5' wird im Bereich F der Druck vorzugsweise getaktet wieder aufgebaut, bis im Punkt 6 das Ende der Testphase erreicht ist. Die zeitliche Länge $\Delta t$ dieser Testphase kann dabei auf unterschiedliche Weise eingestellt werden, wie weiter unten noch gezeigt wird. Ergibt sich demnach eime größere zeitliche Länge $\Delta t$ der Testphase, würde der getaktete Druckaufbau im Bereich F jedenfalls dann beendet, wenn die Radverzögerung wieder zugenommen hat, so daß im Punkte 7 wieder der Verzögerungsschwellwer; -b erreicht ist. Ab dem Punkt 6 bzw. für größere $\Delta t$ ab dem Punkt 7 tritt nun ein Bereich G der erneuten Druckabsenkung ein, der bis zum Punkt 8 andauert, in dem die Radverzögerung in eine Wiederbeschleunigung des Rades übergeht. Ab den zugehörigen Punkt 8' wird der Druck nun in Bereich H bis zum Punkt 9' konstant gehalten, der einen Punkt 9 im Geschwindigkeitsdiagramm entspricht, bei den eine Beschleunigungsschwelle +b der Radbeschleunigung überschritten wurde. Von diesen Punkte an setzt sich die Regelung in einer Weise fort, wie sie aus dem Stand der Technik für übliche Antiblockiersysteme bekannt ist.

Wie aus Figur 2 und der vorstehenden Schilderung ersichtlich, ergibt sich demnach gegenüber den üblichen eingestellten Druckverläufen im wesentlichen eine verlängerte Druckhaltephase C, die zu einem wesentlich erhöhten Bremsschlupf und damit zun Entstehen von Bremsspuren führt.

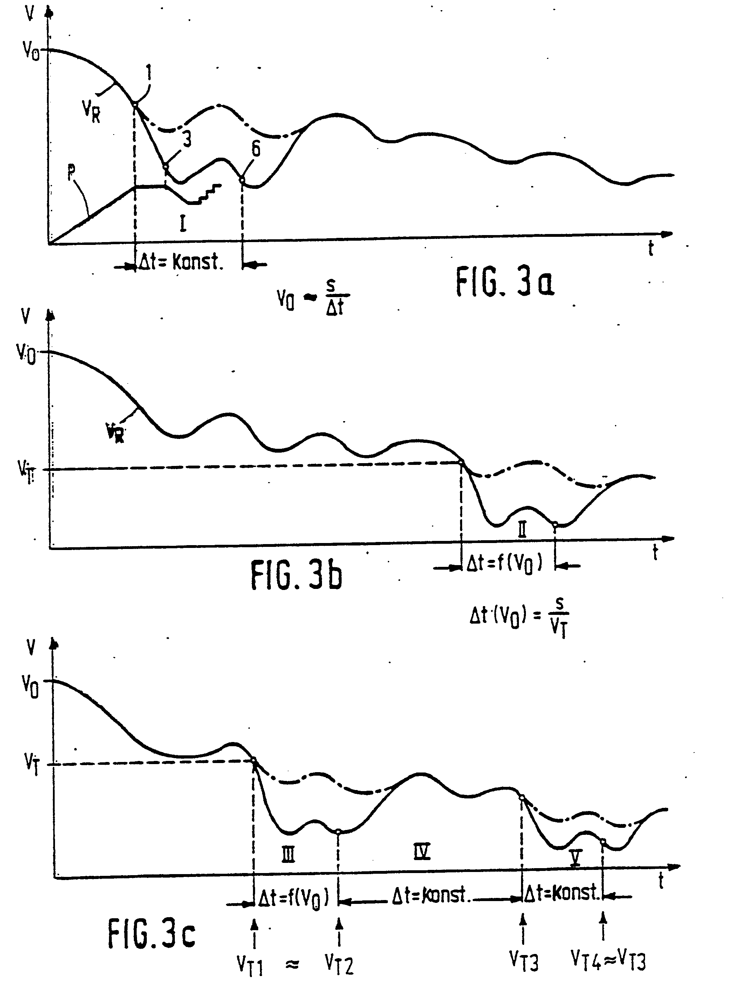

In Figur 3 ist anhand von drei Diagranmen dargestellt, wie bei verschiedenen Ausführungsformen erfindungsgemäßer Verfahren die Testphasen zeitlich angelegt sind. Der Übersichtlichkeit halber sind dabei die Geschwindigkeits- und Druckverläufe nicht mehr im einzelnen dargestellt, sie entsprechen im wesentlichen der Darstellung gemäß Figur 2.

Bei der in Figur 3a dargestellten Ausführungsform eines erfindungsgemäßen Verfahrens wird eine Bremsung mit der Anbremsgeschwindigkeit $v_0$ unter Wirksamwerden eines Antiblockiersystems eingeleitet. Bei Erreichen des Punktes 1 wird numehr in der oben zu Figur 2 ausführlich dargestellten Weise eine Test-Schlupfschaltschwelle $\lambda_{1T}$ vorgegeben, so daß sich der durchgezogen dargestellte Verlauf der Radgeschwindigkeit anstelle des strichpunktierten Verlaufes einstellt. Die Testphase I im Figur 3a hat dabei eine konstante zeitliche Länge. Da bei dem erhöhten Schlupf keine wesentliche Fahrzeugverzögerung in der Testphase I auftritt, kann die Anbremsgeschwindigkeit $v_0$ in guter Näherung als Quotient des Bremsweges $S_B$ und des Zeitintervalls $\Delta t$ bestimmt werden.

Das in Figur 3a veranschaulichte Verfahren ist jedoch nicht in allen Fällen einsetzbar, insbesondere dann nicht, wenn die Anbremsgeschwindigkeit $v_0$ besonders hoch ist. In derartigen Fällen wird erfindungsgemäß ein Verfahren eingesetzt, wie es in Figur 3b veranschaulicht ist. Auch in diesem Fall wird mit einer Anbremsgeschwindigkeit $v_0$ ein Bremsvorgang unter Wirksamwerden eines Antiblockiersystems eingeleitet. Die Bremsung wird jedoch zunächst nicht durch eine Testphase beeinflußt, bis schließlich eine vorgegebenen Testgeschwindigkeit $v_T$ beispielsweise 50 km/h unteschritten wurde. Erfindungsgemäß wird nun erst bei Unterschreiten dieser Testgeschwindigkeit $v_T$ die Einleitung einer Testphase II entsprechend den modifizierten Druckverlauf gemäß Figur 2 eingeleitet, wobei jedoch die Länge dieser Testphase II abhängig von der Anbremsgeschwindigkeit $v_0$ gemacht wird, beispielsweise proportional zu dieser. Wiederum unter der Voraussetzung vernachlässigbarer Fahrzeugverzögerung in der Testphase II kann dann dieses Zeitimtervall in guter Näherung aus dem Quotienten von Bremsspurlänge und festgelegter Testgeschwindigkeit bestimmt werden, wobei eine Umrechnung dieses Zeitintervalls im die Anbremsgeschwindigkeit aufgrund der vorher gewählten Abhängigkeit möglich ist.

Bei eine weitere Ausführungsform des erfindungsgemäßen Verfahrens, die anhand von Figur 3c veranschaulicht ist, wird, wie dies bereits in Figur 3b dargestellt wurde, eine Testphase III erst bei Unterschreiten einer Testgeschwindigkeit $v_t$ eingeleitet. Die Testphase III hat eine von der Anbremsgeschwindigkeit $v_0$ abhängige zeitliche Länge. An die Testphase III schließt sich nun eine weitere Phase IV an, in der das Antiblockiersystem wieder in der üblichen Weise wirksam wird. An die Phase IV schließt sich eine weitere Testphase V mit wiederum erhöhtem Bremsschlupf an. Bei dieser Aneinanderreihung der Phasen III, IV und V ergeben sich Bremsspuren in den Phasen III und V. Die Bremsspur in der Phase III ist dabei ein Maß für die Anbremsgeschwindigkeit $v_0$ wie bereits zu Figur 3b erläutert wurde. Weiterhin kann bei den Verfahren gemäß 3c die Fahrzeugverzögerung bestimmt werden und zwar aus dem Abstand der Bremsspuren in den Phasen III und V. In der Phase IV wird nämlich eine näherungsweise konstante Fahrzeugverzögerung, deren Betrag sich unschwer aus der vorgegebenen zeitlichen Länge $\Delta$ t und den Abstand der Bremsspuren bestimmen läßt. Gemäß einer weiteren Ausbildung des erfindungsgemäßen Verfahrens ist eine Bestimmung der Fahrzeugverzögerung auch dadurch möglich, daß der Testphase V ebenfalls eine konstante zeitliche Länge gegeben wird. Die Fahrzeuggeschwindigkeit in der Phase III entspricht näherungsweise der Testgeschwindigkeit $v_T$ und die Fahrzeuggeschwindigkeit in der Phase V kann auf die Weise bestimmt werden, wie sie zu Figur 3a bereits erläutert wurde. Dann ergibt sich die Fahrzeugverzögerung in der Phase IV in einfacher Weise aus der Differenz dieser beiden Geschwindigkeiten geteilt durch eine konstante zeitliche Länge $\Delta$ t der Phase IV.

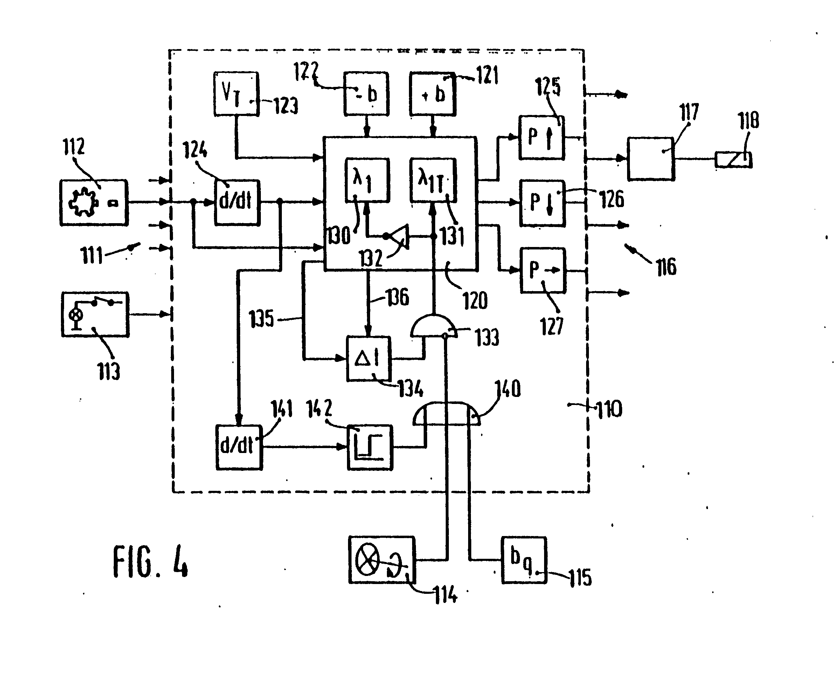

In Figur 4 ist das Blockschaltbild einer Schaltungsanordnung dargestellt, wie es zur Durchführung der erfindungsgemäßen Verfahren verwendet werden kann.

Dabei ist zunächst mit 110 eine Schaltungsanordnung bezeichnet, der verschiedene Eingangssignale zugeführt werden und zwar einmal über Eingänge 111 Drehzahlsignale von an den Rädern befindlichen Drehzahlgebern 112, von denen der Ubersichtlichkeit halber nur einer dargestellt ist, zum anderen ein Signal über die Auslösung eines Bremsvorganges über einen Bremslichtschalter 113 umd schließlich Signale von einem Lenkeinschlagwinkel-Geber 114 und einem Querbeschleunigungsgeber 115.

Die Schaltungsanordnung 110 ist mit verschiedenen Ausgängen 116 an den Bremsdruck im den einzelnen Räder regelnde Magnetventile angeschlossen, von denen wiederum der Übersichtlichkeit halber nur ein Magnetventil 118 dargestellt ist, das über einen Druckregler 117 angesteuert wird.

Das Herz der Schaltungsanordnung 110 bildet eine Auswertschaltung 120, wie sie bei Antiblockiersystemen üblich ist. Diese Auswertschaltung 120 werden konstante Signale von Blöcken 121, 122, 123 zugeführt, nämlich einmal die Beschleunigungsschweile +b, zum anderen die Verzögerungsschwelle –b und schließlich die Testgeschwindigkeit $v_T$. Als Eingangssignale gelangen die Raddrehzahlsignale über Differemzierstufen 124 von denen wiederum nur eine dargestellt ist, zur Auswertschaltung 120 Ausgangsseitig ist die Auswertschaltung 120 an drei Stufen 125, 126, 127 angeschlossen, die symbolisch Ausgangssignale zum Druckanheben, Druckabsenken bzw. Druckkonstanthalten repräsentieren.

In üblichen Auswertschaltungen 120 von Antiblockiersystemen ist weiterhin eine Schlupfschaltschwelle $\lambda$ 1 vorgesehen, die in Figur 4 durch einen Block 130 angedeutet ist. Daneben befindet sich erfindungsgemäß eine vorgegebenen Test-Schlupfschaltschwelle in einem Block 131, wobei die Blöcke 130, 131 von einem UND-Gatter 133 durch Einschaltung eines Inverters 132 vor dem Block 133 wechselweise aktivierbar sind. Der eine Eingang des UND-Gatters 133 ist an ein Zeitglied134 angeschlossen. Das Zeitglied 134 wird über zwei Steuerleitungen 135, 136 von der Auswertschaltung 120 angesteuert, wobei auf der Leitung 135 ein Startsignal für das Zeitglied 134 übertragen wird, wenn die Auswertschaltung 120 hinsichtlich der Beeinflussung des Bremsdrucks wirksam wird und die Steuerleitung 136 ein der Anbremsgeschwindigkeit entsprechendes Signal führt, das die Standzeit des Zeitgliedes 134 bestimmt.

Ein weiterer, invertierter Eingang des UND-Gatters 133 ist mit dem Ausgang eines ODER-Gatters 140 verbunden, das drei Eingänge aufweist. Die beiden ersten Eingänge sind an den Lenkradeinschlagwinkel-Geber 114 bzw. den Querbeschleunigungsgeber 115 angeschlossen, der dritte Eingang steht mit dem Ausgang einer Schweilwertstufe 142 in Verbindung, die eingangsseitig von einer Differenzierstufe 141 angesteuert wird, die vom Ausgangssignal der Differenzierstufe124 beaufschlagt wird.

Die Wirkungsweise der in Figur 4 dargestellten Schaltungsanordnung ist wie folgt:

Die Drehzahlsignale der Geber 112 werden einmal der Auswertschaltung 120 direkt und zum anderen über die Differenzierstufen 124 zugeleitet. Damit können in der oben im einzelnen beschriebenen und aus dem Stand der Technik bekannten Art und Weise die üblichen Kriterien für das Erreichen von Verzögerungs-, Beschleunigungs- und Schlupfschwellen gebildet werden. Die übliche Schlupfschaltschwelle $\lambda_1$ wird dabei aus dem Block 120 entnommen, da der Inverter 132 nicht angesteuert und der Block 130 somit aktiviert ist. Soll nun eine Testphase eingeleitet werden, gelangt ein Steuersignal über die Leitung 135 auf das Zeitglied 134, die Testsignale zugeführt werden. Auf diese Weise ist es möglich, die Fahrstabilität während der Testphasen so wenig wie möglich zu beeinflussen.

Schließlich wird über das ODEN-Gatter 140 eine Sicherheitsschaltung für den Fall vorgesehen, daß das Fahrzeug in kritische Fahrzustände gerät. Um in diesen Zuständen die volle Wirkung des Antiblockiersystems zu erhalten, kann der invertierende Eingang des UND-Gatters 133 angesteuert und dieses damit für die Weiterleitung des Ausgangssignales des Zeitgliedes 134 gesperrt werden. Am Ausgang des ODER-Gatters 140 erscheint einmal dann ein Signal, wenn die Querbeschleunigung des Fahrzeuges einen vorbestimmten Betrag überschreitet, was durch den Querbeschleunigungs-Geber 115 erkannt wird, wenn der Lenkradeinschlagwinkel einen vorbestimmten Betrag überschreitet, was durch den Lenkradeinschlagwinkel-Geber 114 erkannt wird oder wenn der Gradient der Radverzögerung einen vorbestimmten Betrag überschreitet, was über die Differenzierstufe 124, 141 und die Schwellwertstufe 142 erkannt wird. Dieser letzte Fäll tritt beispielsweise dann auf, wenn auf regennasser Straße im stabilen Bereich die Radverzögerung stark zunimmt und damit eine Instabilität des Fahrverhaltens einzutreten droht. so daß an einen Eingang des UND-Gatters 133 für die Zeit t ein positives Signal anliegt. Unter der Voraussetzung, daß auch der andere Eingang durchgesteuert wird, wird nun in der Auswertschaltung 120 vermittels des Inverters 132 schwelle $\lambda_{1T}$ umgeschaltet. Über die Leitung 136 ist es dabei möglich, die Standzeit $\Delta$ t des Zeitgliedes134 in Abhängigkeit von der jeweils vorliegenden Fahrgeschwindigkeit zu beeinflussen, insbesondere in der Weise, daß die Standzeit bei hohen Geschwindigkeiten niedrig und bei niedrigen Geschwindigkeiten hoch ist.

Über die Blöcke 125, 126, 127 wird nun der an sich bekannte Druckverlauf in den Magnetventilen 118 erzeugt.

Soll die Testphase entsprechend Figur 3b und 3c erst unterhalb einer bestimmten Testgeschwindigkeit $v_T$ einsetzten, wird die jeweils vorliegende Fahrzeuggeschwindigkeit mit der im Block 123 gespeicherten Testgeschwindigkeit $v_T$ verglichen und die Testphase über die Leitung 135 erst bei Erreichen dieses Geschwindigkeitswertes ausgelöst. Über die Leitung 136 wird die Standzeit des Zeitgliedes 134 so beeinflußt, daß sie von der Anbremsgeschwindigkeit, die zu Beginn des Bremsvorganges gespeichert wurde, abhängt, beispielsweise ihr proportional ist.

Das in Figur 3c veranschaulichte Verfahren kann in einfacher weise durch zeitliche Aufeinanderfolge der oben beschriebenen Schritte verwirklicht werden.

Weiterhin ist es möglich, die Auswerschaltung 120 doppelt auszulegen, so daß gleichzei;ig eine normale Breisphase mit Antiblockiersystem und eine Testphase ablaufen kann. Dann können die Magnetventile 118 der Hinterräder und beispielsweise eines Vorderrades von den üblichen Signalen angesteuert werden, während einem oder beiden Vorderrädern

## Patentansprüche

1. Verfahren zum Speichern von Fahrzustandsgrößen für Fahrzeuge mit Gebern zur Erfassung von Fahrzustandsgrößen des Fahrzeugs und einer Auswerteschaltung, in der aus den Gebersignalen Steuersignale zur Beeinflussung des Bremsdruckes bei vorbestimmten Fahrzuständen gebildet werden (Antiblockiersystem), dadurch gekennzeichnet, daß die zur Rekonstruktion des Fahrzeugverhaltens während des Wirksamwerdens des Antiblockiersystems (14, 120) benötigten Fahrzustandsgrößen, wenigstens jedoch die Fahrzeuggeschwindigkeit $V_F$ und der Bremsweg $S_B$ während des Wirksamwerdens des Antiblockiersystems (14, 120) im Fahrzeug gespeichert werden (Speicher 23)

2. Verfahren zum Speichern von Fahrzustandsgrößen für Fahrzeuge mit Gebern zur Erfassung von Fahrzustandsgrößen des auf einer Fahrbahn sich bewegenden Fahrzeuges und einer Auswerteschaltung, in der aus den Gebersignalen Steuersignale zur Beeinflussung des Bremsdruckes bei vorbestimmten Fahrzuständen gebildet werden (Antiblockiersystem), dadurch gekennzeichnet, daß zur Rekonstruktion des Fahrzeugverhaltens während des Wirksamwerdens des Antiblockiersystems (14) die Fahrbahn markiert wird (Markierer 25).

3. Verfahren nach Anspruch 1, dadurch gekennzeichnet, daß zusätzlich die Fahrbahn während des Wirksamwerdens des Antiblockierregelsystems (14) markiert wird (Markierer 25).

4. Verfahren nach Anspruch 1 oder 3, dadurch gekennzeichnet, daß die Fahrzustandsgrößen während der Dauer des Ansprechens der Auswertschaltung gespeichert werden.

5. Verfahren nach Anspruch 4, dadurch gekennzeichnet, daß die Fahrzustandsgrößen nur bei gleichzeitigem Überschreiten einer vorgegebenen Grenzverzögerungt $b_G$) gespeichert werden.

6. Verfahren nach Anspruch 4 oder 5, dadurch gekennzeichnet, daß die Fahrzustandsgrößen nur gespeichert werden, wenn gleichzeitig der Bremslichtschalter (13) oder ein Bremsdruckregler (12) anspricht.

7. Verfahren nach einem der Ansprüche 1, 3 bis 6, dadurch gekennzeichnet, daß ein Fahrzustandsgrößen-Speicher (23) vorgesehen ist, aus dem die Fahrzustandsgrößen als Steuergrößen in dasselbe oder ein anderes Fahrzeug zur Rekonstruktion des Bremsvorganges überspielbar sind.

8. Verfahren nach Anspruch 7, dadurch gekennzeichnet, daß der Fahrzustandsgrößen-Speicher (23) in einen vorzugsweise plombiert verschlossenen Steckmodul angeordnet ist.

9. Verfahren nach einem der Ansrüche 2 bis 8, dadurch gekennzeichnet, daß die Markierung impulsweise mit konstanter Impulszeit vorgenommen wird.

10. Verfahren nach einem der Ansprüche 2 bis 9, zum Regeln des Bremsdruckes bei Fahrzeugen mit Antiblockkiersystemen bei dem Fahrzustandsgrößen über Geber (12) erfaßt und in einer Auswertschaltung (20) in Steuersignale zum Beeinflussen des Bremsdruckes in Abhängigkeit davon umgewandelt werden, ob der vorliegende Schlupf ($\lambda$) zwischen Rad und Fahrbahn eine vorgegebene Schlupfschaltschwelle ($\lambda_1$) unterschreitet, dadurch gekennzeichnet, daß während des Wirksamwerdens der Auswertschaltung (20) wenigstens eine Testphase (I, II, III, V) vorgesehen ist, in der die Schlupfschaltschwelle ($\lambda_1$) auf einen vorbestimmten Betrag ($\lambda_{1T}$) abgesenkt wird, der das Auftreten von Bremsspuren zur Folge hat.

11. Verfahren nach Anspruch 10, dadurch gekennzeichnet, daß die Testphase (I, II, III, V)

eingeleitet wird, wenn die Radverzögerung einen vorbestimmten Betrag (-b) überschreitet, wodurch der Bremsdruckaufbau beendet und der Druck konstant gehalten wird, bis die Test-Schlupfschaltschwelle ($\lambda_{1T}$) erreicht ist.

12. Verfahren nach Anspruch 11, dadurch gekennzeichnet, daß nach Überschreiten der Test-Schlupfschaltschwelle ($\lambda_{1T}$) der Druck bis zum Wiedererreichen des vorbestimmten Betrages (-b) der Radverzögerung abgesenkt, dann bis zum Wiedererreichen der Test-Schlupfschaltschwelle ($\lambda_{1T}$) konstantgehalten und anschließend, vorzugsweise getaktet, wieder erhöht wird.

13. Verfahren nach einem der Ansprüche 10 bis 12, dadurch gekennzeichnet, daß die Testphase (I) in ersten Bremszyklus einer Bremsung mit wirksamer Auswertschaltung eingeleitet wird und eine konstante Länge aufweist.

14. Verfahren nach einem der Ansprüche 10 bis 12, dadurch gekennzeichnet daß die Testphase (II, III) im ersten Bremszyklus mit wirksamer Auswertschaltung nach Unterschreiten einer vorgegebenen Fahrzeug-Testgeschwindigkeit ($v_T$) eingeleitet wird und eine Länge aufweist, die von der Anbremsgeschwindigkeit ($v_o$) abhängt.

15. Verfahren nach Anspruch 14, dadurch gekennzeichnet, daß sich an die Testphase (III) eine Phase (IV) konstanter Länge unter Berücksichtigung der Schlupfschaltschwelle ($\lambda_1$) und an diese eine weitere Testphase (V) unter Berücksichtigung der Test-Schlupfschaltschwelle ($\lambda_{1T}$) anschließt.

16. Verfahren nach Anspruch 15, dadurch gekennzeichnet, daß die weitere Testphase (V) eine konstante Länge aufweist.

17. Verfahren nach einem der Ansprüche 10 bis 16, dadurch gekennzeichnet, daß die Test-Schlupfschaltschwelle ($\lambda_{1T}$) bei hohen Geschwindigkeiten niedrig und bei niedrigen Geschwindigkeiten hoch eingestellt wird.

18. Verfahren nach einen der Ansprüche 10 bis 17, dadurch gekennzeichnet, daß die wenigstens eine Testphase (I, II, III, V) nur hinsichtlich der Vorderräder oder eines Vorderrades wirksam wird.

19. Verfahren nach einem der Ansprüche 10 bis 18, dadurch gekennzeichnet, daß die wenigstens eine Testphase (I, II, III, V) in kritischen Fahrzuständen, beispielsweise bei Überschreiten einer vorgegebenen Querbeschleunigung, Lenkradeinschlagwinkels oder Radverzögerungsgradienten unterdrückt wird.

**Claims**

1. Process for the storage of driving state variables for vehicles with transmitters for the recording of driving state variables of the vehicle and an evaluation circuit in which control signals for influencing the brake pressure in predetermined driving states are formed from the transmitter signals (antiblocking system), characterised in that the driving state variables required for reconstruction of the vehicle behaviour during activation of the antiblocking system (14, 120), but at least the vehicle velocity VF and the braking distance $S_B$, are stored in the vehicle (memory 23) during activation of the antiblocking system (14, 120).

2. Process for the storage of driving state variables for vehicles with transmitters for the recording of driving state variables of the vehicle moving on a carriageway and an evaluation circuit in which control signals for influencing the brake pressure in predetermined driving states are formed from the transmitter signals (antiblocking system), characterised in that, for reconstruction of the vehicle behaviour, the carriageway is marked (marker 25) during activation of the antiblocking system (14).

3. Process according to Claim 1, characterised in that, in addition, the carriageway is marked (marker 25) during activation of the antiblocking control system (14).

4. Process according to Claim 1 or 3, characterised in that the driving state variables are stored during the period of response of the evaluation circuit.

5. Process according to Claim 4, characterised in that the driving state variables are only stored when a specified limit delay (-bG) is simultaneously exceeded

6. Process according to Claim 4 or 5, characterised in that the driving state variables are only stored if the brake light switch (13) or a brake pressure controller (12) responds simultaneously.

7. Process according to one of Claims 1, 3 to 6, characterised in that a driving state variable memory (23) is provided from which the driving state variables can be rerecorded as control variables into the same or another vehicle for reconstruction of the braking operation.

8. Process according to Claim 7, characterised in that the driving state variable memory (23) is arranged in a preferably lead-sealed plug-in module.

9. Process according to one of Claims 2 to 8, characterised in that the marking is performed by pulses with a constant pulse time.

10. Process according to one of Claims 2 to 9, for controlling the brake pressure on vehicles with antiblocking systems in which driving state variables are recorded via transmitters (12) and converted in an evaluation circuit (20) into control signals for influencing the brake pressure in dependence on whether the existing slip ($\lambda$) between wheel and carriageway drops below a specified slip switch threshold ($\lambda_1$), characterised in that, during activation of the evaluation circuit (20), at least one test phase (I, II, III, V) is provided in whith the slip switch threshold ($\lambda_1$) is reduced to a predetermined amount ($87_{1T}$) which results in the occurrence of skid marks.

11. Process according to Claim 10, characterised in that the test phase (I, II, III, V) is introduced if the wheel deceleration exceeds a predetermined amount (-b), causing the brake pressure build-up to be ended and the pressure to be held constant, until the test slip switch threshold ($\lambda_{1T}$) is reached.

12. Process according to Claim 11, characterised in that, once the test slip switch threshold ($\lambda_{1T}$) has been exceeded, the pressure is reduced until the predetermined amount (-b) of wheel deceleration is reached again, then it is held constant until the test slip switch threshold ($_{1T}$) is reached again and finally is increased again, preferably in clocked sequence.

13. Process according to one of Claims 10 to 12, characterised in that the test phase (I) is introduced in the first braking cycle of a braking action with active evaluation circuit and has a constant length.

14. Process according to one of Claims 10 to 12, characterised in that the test phase (II, III) is introduced in the first braking cycle with active evaluation circuit after dropping below a specified vehicle test velocity (vT) and has a length which depends on the initial braking velocity ($v_0$)'

15. Process according to Claim 14, characterised in that the test phase (III) is followed by a phase (IV) of constant length with consideration of the slip switch threshold ($\lambda_1$) and this is followed by a further test phase (V) with consideration of the test slip switch threshold ($\lambda_{1T}$).

16. Process according to Claim 15, characterised in that the further test phase (V) has a constant length.

17. Process according to one of Claims 10 to 16, characterised in that the test slip switch threshold ($\lambda_{1T}$) is set low at high velocities and is set high at low velocities.

18. Process according to one of Claims 10 to 17, characterised in that the at least one test phase (I, II, III, V) is only active with respect to the front wheels or one front wheel.

19. Process according to one of Claims 10 to 18, characterised in that the at least one test phase (I, II, III, V) is suppressed in critical driving states, for example when a specified lateral acceleration, steering wheel angle or wheel deceleration gradient is exceeded.

**Revendications**

1°) Procédé pour mettre en mémoire des grandeurs de l'état de marche d'un véhicule avec des capteurs pour détecter des grandeurs d'état de marche du véhicule et un circuit d'exploitation dans lequel sont élaborés, à partir des signaux des capteurs, des signaux de commande pour agir sur la pression de freinage dans des états de marche predéterminés (système anti-blocage), procédé caractérisé en ce que les grandeurs d'état de marche nécessaires pour reconstituer le comportement du véhicule pendant la mise en fonctionnement du système anti-blocage (14, 120), tout au moins la vitesse ($V_F$) du véhicule et le trajet de freinage ($S_B$) pendant la mise en fonctionnement du système anti-blocage (14, 120), sont mémorisées dans le véhicule (mémoire 23).

2°) Procédé pour mettre en mémoire des grandeurs d'état de marche de véhicule avec des détecteurs pour détecter des grandeurs d'état de marche du véhicule se déplaçant sur une chaussée et avec un circuit d'exploitation dans lequel des signaux de commande sont elabores a partir des signaux des détecteurs pour agir sur la pression de freinage dans des états de marche prédéterminés (système anti-blocage), procédé caractérisé en ce que, pour la reconstitution du comportement du véhicule pendant la mise en fonctionnement du système anti-blocage (14), la chaussée est marquée (dispositif de marquage 25).

3°) Procédé selon la revendication 1, caractérisé en ce que la chaussée est en outre marquée (dispositif de marquage 25) pendant la mise en fonctionnement du système anti-blocage (14).

4°) Procédé selon la revendication 1 ou 3, caractérisé en ce que les grandeurs d'état de marche sont mises en mémoire pendant le délai de réponse du circuit d'exploitation.

5°) Procédé selon la revendication 4, caractérisé en ce que les grandeurs d'état de marche ne sont mises en mémoire qu'en cas de dépassement simultané d'une décélération limite prédéfinie (-$b_G$).

6°) Procédé selon la revendication 4 ou 5, caractérisé en ce que les grandeurs d'état de marche ne sont mises en mémoire que lorsque, simultanément, le contacteur du voyant de freinage (13) ou bien un régulateur de pression de freinage (12) réagit.

7°) Procédé selon l'une des revendications 1, 3 à 6, caractérisé en ce qu'il est prévu une mémoire (23) de grandeurs d'état de marche, à partir de laquelle ces grandeurs d'état de marche sont susceptibles d'etre réenregistrées dans ce même véhicule ou bien dans un autre véhicule pour reconstituer le processus de freinage.

8°) Procédé selon la revendication 7, caractérisé en ce que la mémoire (23) des grandeurs d'état de marche est disposée de préférence dans un module enfichable fermé et plombe.

9°) Procédé selon l'une des revendications 2 à 8, caractérisé en ce que le marquage est effectué par impulsions avec un temps d'impulsions constant.

10°) Procédé selon l'une des revendications 2 à 9, pour le réglage de la pression de freinage dans le cas de véhicules munis de systèmes anti-blocage, procédé dans lequel des grandeurs de l'état de marche sont détectées par l'intermédiaire de détecteurs (12) et converties dans un circuit d'exploitation (20) en signaux de commande pour agir sur la pression de freinage si le glissement ($\lambda$) existant entre la roue et la chaussée tombe au-dessous d'un seuil de commutation de glissement ($\lambda_1$), procédé caractérisé en ce que, pendant que le circuit d'exploitation (20) devient efficace, il est prévu au moins une phase d'essai (I, II, III, V) au cours de laquelle le seuil de commutation de glissement ($\lambda_1$) est abaissé à une valeur

prédéterminée ($\lambda_{1T}$) qui a pour conséquence l'apparition de traces de freinage.

11°) Procédé selon la revendication 10, caractérisé en ce que la phase d'essai (I, II, III, V) est démarrée lorsque le retard de la roue dépasse une valeur prédéterminée (-b), grâce à quoi l'accroissement de la pression de freinage prend fin et cette pression est maintenue constante jusqu'à ce que le seuil de commutation de glissement ($\lambda_{1T}$) d'essai soit atteint.

12°) Procédé selon la revendication 11, caractérisé en ce que, après dépassement du seuil de commutation de glissement d'essai ($\lambda_{1T}$), la pression est abaissée jusqu'à ce qu'on obtienne à nouveau la valeur prédéterminée (-b) du retard de la roue, puis elle est maintenue ensuite constante jusqu'à ce qu'on obtienne a nouveau le seuil de commutation de glissement d'essai ($\lambda_{1T}$), et enfin elle est augmentée à nouveau, de préférence de manière pulsée.

13°) Procédé selon l'une des revendications 10 à 12, caractérisé en ce que la phase d'essai (I) dans le premier cycle d'un freinage est démarrée alors que le circuit d'exploitation est efficace et elle a une longueur constante.

14°) Procédé selon l'une des revendications 10 à 12, caractérisé en ce que la phase d'essai (II, III) dans le premier cycle de freinage est démarrée alors que le circuit d'exploitation est efficace après le franchissement vers le bas d'une vitesse d'essai ($v_T$) prédéfinie du véhicule, et elle a une longueur dépendant de la vitesse de freinage ($v_o$).

15°) Procédé selon la revendication 14, caractérisé en ce que, à la phase d'essai (III) se raccorde une phase (IV) de longueur constante en tenant compte du seuil de commutation de glissement ($\lambda_1$) et qu'à cette phase se raccorde une autre phase d'essai (V) en tenant compte du seuil de commutation de glissement d'essai ($\lambda 1T$).

16°) Procédé selon la revendication 15, caractérisé en ce que la phase d'essai supplémentaire (V) a une longueur constante.

17°) Procédé selon l'une des revendications 10 à 16, caractérisé en ce que le seuil de commutation de glissement d'essai ($\lambda_{1T}$) est réglé à un niveau bas pour des vitesses élevées et a un niveau élevé pour des vitesses basses.

18°) Procédé selon l'une des revendications 10 à 17, caractérisé en ce que la phase d'essai éventuellement unique (I, II, III, V) n'est agissante qu'en ce qui concerne les roues avant ou bien une roue avant.

19°) Procédé selon l'une des revendications 10 à 18, caractérisé en ce que la phase d'essai éventuellement unique (I, II, III, V) est supprimée dans des états de marche critiques, par exemple lors du dépassement et d'une accélération transversale prédéfinie, d'un angle d'attaque des roues directrices prédéfini ou bien de gradients de retard de roues prédéfinis.

FIG. 1

FIG. 2

FIG. 3a

$$V_0 \approx \frac{s}{\Delta t}$$

FIG. 3b

$$\Delta t (V_0) = \frac{s}{V_T}$$

FIG. 3c

FIG. 4